# EUROPÄISCHE PATENTSCHRIFT

(11) **EP 2 104 553 B1**
(45) Veröffentlichungstag und Bekanntmachung des Hinweises auf die Patenterteilung: **26.03.2014**
(21) Anmeldenummer: 07848103.3
(22) Anmeldetag: 14.12.2007
(51) Int. Cl.: B01F 5/04, B01J 8/02, B01J 8/04, B01J 8/00

(54) **REAKTOR ZUR DURCHFÜHRUNG EINER REAKTION ZWISCHEN ZWEI FLUIDEN EDUKTEN AN EINEM KATALYSATORBETT MIT VORVERMISCHEN DER FLUIDEN EDUKTE IN EINER EINMISCHVORRICHTUNG**
REACTOR FOR CARRYING OUT A REACTION BETWEEN TWO FLUIDS ON A CATALYST BED, SAID FLUIDS BEING PREVIOUSLY MIXED IN A MIXING DEVICE
RÉACTEUR POUR RÉALISER UNE RÉACTION ENTRE DEUX FLUIDES SUR UN LIT CATALYTIQUE, LES FLUIDES ÉTANT PRÉMÉLANGÉS DANS UN DISPOSITIF DE MÉLANGE

(30) Priorität: 19.12.2006 DE 102006060507; 20.12.2006 US 870945 P
(43) Veröffentlichungstag der Anmeldung: 30.09.2009
(60) Teilanmeldung: 12175556.5
(73) Patentinhaber: BASF SE, 67056 Ludwigshafen (DE)
(72) Erfinder: OLBERT, Gerhard, 69221 Dossenheim (DE); CORR, Franz, 67067 Ludwigshafen (DE); CRONE, Sven, 67117 Ludwigshafen (DE)
(86) Internationale Anmeldenummer: PCT/EP2007/063951
(87) Internationale Veröffentlichungsnummer: WO 2008/074737

(56) Entgegenhaltungen:
- DE-A1- 3 240 987
- US-A- 2 350 644
- US-A- 2 417 393
- US-A- 3 214 247
- US-A- 5 462 719

## Beschreibung

Die Erfindung betrifft einen Reaktor zur Durchführung einer Reaktion zwischen zwei fluiden Edukten an einem Katalysatorbett mit Vorvermischen der fluiden Edukte in einer Einmischvorrichtung, eine Einmischvorrichtung für den Reaktor sowie eine Verwendung.

In der chemischen Verfahrenstechnik gibt es eine Reihe von Verfahren, wonach zwei fluide Edukte vorvermischt und anschließend an einem Katalysatorbett umgesetzt werden. Hierbei ist für einen gleichmäßigen Reaktionsverlauf eine möglichst homogene Vorvermischung bei häufig sehr kurzen zulässigen Verweilzeiten, oft unter 150 ms, oder unter 50 ms, erforderlich, bevor das Reaktionsgemisch den Katalysator kontaktiert und dieser die Kontrolle über das Reaktionsgeschehen übernimmt.

Um diese anspruchsvolle Aufgabe zu lösen, sind Einmischvorrichtungen erforderlich, die in sehr kurzer Zeit eine möglichst hohe Mischgüte erreichen, das heißt Einmischvorrichtungen mit möglichst geringer Bauhöhe UD, wobei L die Länge der Einmischvorrichtung in Strömungsrichtung des Hauptfluids und D die Anströmfläche des Katalysatorbettes senkrecht zur Strömungsrichtung des Hauptfluides bezeichnet.

Bekannte Einmischvorrichtungen für axial, das heißt in Richtung ihrer Längsachse, durch-strömte Reaktoren, erreichen günstigenfalls eine Bauhöhe UD von vier. Eine derartige Vorrichtung ist beispielsweise aus der DE-A 10 2004 024 957 bekannt, wonach in einen Axialstromreaktor, in dem ein Katalysatorbett angeordnet ist, ein Reaktionsgas axial, das heißt in Reaktorlängsrichtung, über ein Rohrbündel von Gasdurchführungsrohren eingedüst wird, die an beiden Enden der Rohrböden befestigt sind und die mit Eintrittsöffnungen für Sauerstoff ausgestattet sind, der in den Zwischenraum um die Gasdurchführungsrohre eingeleitet wird.

Dokument US-A 5,462,719 beschreibt einen Reaktor mit Einrichtungen zum Mischen von Reaktanden, umfassend gelochte Bleche, nicht jedoch zwei oder drei hintereinander angeordnete Reihen von Rohren mit Turbulenzerzeugern auf deren Außenseite sowie einem den Rohren vorgeschaltetem Lochblech und einem den Rohren nachgeschaltetem Lochblech.

Dokument DE-A 32 40 987 beschreibt eine Verteil- Sammelvorrichtung bestehend aus einem Zylinderrost, einem perforierten, in dem Zylinderrost angeordneten Rohr und aus Stützscheiben, die ebenfalls in dem Zylinderrost angeordnet sind. Der Zylinderrost besteht aus Stützstäben und einem Drahtgitterstrang, der schraubenförmig um die Stützstäbe gewickelt ist. Das perforierte Rohr ist mit Öffnungen zum Verteilen oder Sammeln eines Fluids, das durch den DrahtgitterStrang fließt, versehen.

Dokument US 3,214,247 beschreibt einen Apparat zum Inkontaktbringen von Fluiden und Feststoffen mit mehreren, voneinander beabstandet angeordneten gepackten Abschnitten, wobei in den nicht gepackten Bereichen Verteilerrohre mit Öffnungen angeordnet sind, wobei die Öffnungen in zwei einander gegenüberliegenden Reihen vorgesehen sind, sowie mit nicht perforierten, horizontalen Trennblechen in der Ebene der Verteilerrohre, die im Bereich der Verteilerrohre ausgeschnitten sind, und die Strömung des Fluids, das den Apparat im Wesentlichen vertikal passiert, in den Strömungsberecih des Fluids aus den Öffnungen des Verteilerrohres leitet. Das Dokument beschreibt nicht mehrere, hintereinander angeordnete Reihen von Rohren, es beschreibt keine Turbulenzerzeuger auf der Außenseite der Rohre und auch nicht, dass den Rohren ein Lochblech vorgeschaltet und ein weiteres Lochblech nachgeschaltet ist.

Es war demgegenüber Aufgabe der Erfindung, einen Reaktor mit einer Einmischvorrichtung zur Verfügung zu stellen, wonach in einem Vormischschritt zwischen zwei fluiden Edukten vor der Zuführung derselben auf ein Katalysatorbett eine nahezu 100 %ige Mischgüte bei stark verringerter Länge der Einmischvorrichtung in Strömungsrichtung des Hauptfluids, und somit unter Einhaltung sehr kurzer Verweilzeiten, zur Verfügung zu stellen.

Die Aufgabe wird gelöst durch einen Reaktor zur Durchführung einer Reaktion zwischen zwei fluiden Edukten an einem Katalysatorbettmit Vorvermischen der fluiden Edukte vor der Zuführung zum Katalysatorbett innerhalb einer Verzögerungszeit kleiner als 150 ms in einer Einmischvorrichtung, dadurch gekennzeichnet, dass die Einmischvorrichtung aus den folgenden Elementen gebildet ist, die im Wesentlichen quer zur Anströmrichtung des ersten fluiden Eduktstromes angeordnet sind:
- zwei oder drei hintereinander angeordneten Reihen von Rohren, mit Turbulenzerzeugern auf der Außenseite derselben, die Rippenrohre sind, mit einem Außendurchmesser im Bereich zwischen 25 und 50 mm, wobei die zweite Reihe von Rippenrohren gegenüber der ersten auf Lücke angeordnet ist sowie für den Fall von drei Rippenrohrreihen, die dritte Rippenrohrreihe auf Lücke zur zweiten Rippenrohrreihe angeordnet ist, und die den freien Durchtrittsquerschnitt für den ersten fluiden Eduktstrom, auf 1/2 bis 1/10 verengen, wobei durch die Innenräume der Rohre der zweite fluide Eduktstrom geleitet und über Öffnungen in den Rohren in den ersten fluiden Eduktstrom eingedüst wird, wobei die Turbulenzerzeuger als Rippen ausgebildet sind und die Öffnungen in den Rohren in den Rippengängen zwischen den Rippen münden, und wobei die Rippenrohre am Außenumfang der sie bildenden Rohre in den Rippengängen zwischen den Rippen pro Rippengang jeweils zwei diametral entgegengesetzte Öffnungen aufweisen, an den Stellen mit dem geringsten Abstand zu dem jeweils benachbarten Rippenrohr in der Rippenrohrreihe sowie
- einem den Rohren vorgeschalteten Lochblech und
- einem den Rohren nachgeschalteten Lochblech, mit Öffnungen, deren Durchmesser größer oder gleich dem Durchmesser des vorgeschalteten Lochbleches ist
und wobei die Einmischvorrichtung eine Bautiefe, d. h. einen Abstand zwischen dem vorgeschalteten Lochblech und dem nachgeschalteten Lochblech, im Bereich zwischen 100 und 200 mm aufweist.

Es wurde gefunden, dass es möglichst ist, durch den Einsatz von als Wärmetauscher bekannten und handelsüblichen Rippenrohren durch geringfügige Modifizierungen derselben, indem Öffnungen in den Rippengänge zwischen den Rippen vorgesehen werden, die Zwischenräume der Rippengänge zwischen den Rippen als nahezu ideale Mischkammern mit hoher Turbulenz zu nutzen, indem ein erster fluider Eduktstrom im Wesentlichen quer zu den Rippenrohren und ein zweiter fluider Eduktstrom durch die Innenräume der Rippenrohre über die Öffnungen in den Rippengängen in den ersten fluiden Eduktstrom eingedüst wird.

Als Fluid werden in bekannter Weise alle Flüssigkeiten, Dämpfe und Gase bezeichnet, die den strömungstechnischen Gesetzen nicht fester Kontinua folgen. Bei den fluiden Edukten handelt es sich vorliegend insbesondere um gasförmige oder flüssige Edukte, bevorzugt um gasförmige Edukte. Die fluiden Edukte können jeweils eine oder mehrere Substanzen umfassen.

Häufig sind die Volumenströme der zwei fluiden Edukte stark unterschiedlich, was die Mischaufgabe entsprechend erschwert: der Mengenstrom des zweiten fluiden Eduktes kann insbesondere zwischen 1 und 30 %, des Mengenstromes des ersten fluiden Eduktstromes betragen, oder auch zwischen 5 und 20 % desselben.

Das Katalysatorbett ist aus Katalysatorfeststoffpartikeln gebildet, das heißt es handelt sich um einen bezüglich der fluiden Edukte heterogenen Katalysator. Die Katalysatorfeststoffpartikel können bevorzugt ein Katalysatorfestbett bilden oder, in einer weiteren bevorzugten Ausführungsform ein Katalysatorbett.

Das Katalysatorbett, auch als Katalysatorschüttung bezeichnet, kann in zylindrisch aufrechtstehenden Reaktoren in horizontaler oder auch in vertikaler Lage eingebracht sein Hierbei kann es sich auch um mehrere Katalysatorbetten handeln. Der Katalysator, in der Regel als rieselfähige Formkörper, kann in Haltevorrichtungen, beispielsweise Katalysatorkörben, eingebraucht sein. Weiter bevorzugt können die Haltevorrichtungen aus Tragrosten, Siebgeweben, Kantenspaltsieben, usw. gebildet sein.

Das Reaktionsgasgemisch strömt das Katalysatorbett von der Seite einer Anstromfläche desselben an und verlässt das Katalysatorbett über eine Abströmfläche.

In der Einmischvorrichtung werden die fluiden Edukte vorvermischt. Unter Vorvermischen wird vorliegend ein Mischen vor Eintritt in das Katalysatorbett verstanden.

Die Rohre mit Turbulenzerzeugern auf der Außenseite derselben sind Rippenrohre.

Rippenrohre sind in der chemischen Verfahrenstechnik bekannt und werden insbesondere als Wärmetauscherrohre eingesetzt. Rippenrohre und ihre Herstellung sind beispielsweise in DE-A 1 950 246 oder DE-A 2 131 085, beschrieben.

Ein Rippenrohr ist aus einem Rohr, in der Regel einem Metallrohr, mit zylindrischem Außenumfang gebildet, mit auf diesem, in der Regel durch Schweißen entlang einer Längskante desselben aufgebrachten länglichen Streifens, den Rippen. Die Rippen sind häufig spiral bzw. wendelförmig auf dem Außenumfang des Rohres, können aber auch in Längsrichtung desselben angebracht sein. Sie haben normalerweise eine glatte &durchlaufende Oberfläche, können aber auch perforiert sein. Sie können durchlaufend, aber auch, vorteilhaft, unter Ausbildung von Segmenten bis auf eine Rippenbasis eingeschnitten sein. Eingeschnittene Rippen sind besonders geeignet zur Erhöhung der Turbulenz. Die Segmente können hierbei unterschiedliche Geometrien aufweisen, beispielsweise in Form von Rechtecken, Trapezen, usw.. Die Einschnitte zwischen den Segmenten können mit oder ohne Materialverlust ausgeführt sein. Besonders vorteilhaft können die Segmente gegenüber der Rippenbasis in einem Winkel verdreht bzw. geschränkt ausgebildet sein, um über einen Anstellwinkel die Turbulenz insbesondere in den Bereichen zwischen den Rippen, den Rippengängen, zu erhöhen, und entsprechend die Mischwirkung zu verbessern

Eine dichte Anordnung von Rippen über die Rohrlänge ist vorteilhaft, insbesondere können 100 bis 300 Umläufe der Rippen pro Meter Rohrlänge vorgesehen sein.

Erfindungsgemäß werden Rohre mit einem Außendurchmesser im Bereich zwischen 25 und 50 mm, eingesetzt.

Die Rippenhöhe bezogen auf den Außendurchmesser der Rohre liegt vorteilhaft in einem Bereich zwischen 1/10 und 1/2.

Die Rippendicke kann vorteilhaft zwischen 0,3 und 1,5 mm liegen,

Bei eingeschnittenen Rippen ist es vorteilhaft, Segmente mit einer Breite zwischen 3 und 12 mm, bevorzugt zwischen 4 und 8 mm, auszubilden.

Die Rohre können jeden Querschnitt aufweisen, beispielsweise kreisförmig, oval oder auch polygonal, zum Beispiel dreieckig.

Die Rippenrohre sind in Reihen, parallel zueinander angeordnet, wobei eine Rippenrohrreihe in einer Ebene liegen oder auch entlang eines Kreisradius angeordnet sein kann.

Die Anordnung der Rippenrohre hängt insbesondere von der beabsichtigten Stromführung im Reaktor ab:
Bei Axialstromapparaten, mit Durchleitung des Reaktionsgemisches in Richtung der Längsachse des häufig zylindrischen Reaktors sind das Katalysatorbett oder die Katalysatorbetten horizontal, entlang eines Reaktorquerschnittes, angeordnet. Entsprechend müssen die, einen Teil der Einmischvorrichtung bildenden Rippenrohrreihen im Wesentlichen parallel zu den Katalysatorbetten, in einer Querschnittsebene des Reaktors, angeordnet sein.

Bei Radialstromreaktoren, mit radialer Strömungsrichtung des Reaktionsgasgemisches, sind ein oder mehrere Katalysatorbetten in Form eines Hohlzylinders mit der Bettdicke entsprechender Wandstärke, in geeigneten Aufnahmevorrichtungen, beispielsweise Körben, angeordnet. Auf der Anströmseite des Katalysatorbettes, die innen oder außen sein kann, sind die Rippenrohre entlang eines zum Katalysatorbett konzentrischen Kreisringes angeordnet.

Es hat sich gezeigt, dass für die erfindungsgemäße Mischaufgabe zwei oder drei Reihen von Rippenrohren geeignet sind.

In einer bevorzugten Ausführungsform kann die Zusammensetzung des zweiten fluiden Eduktstromes in den einzelnen Rippenrohrreihen unterschiedlich sein. Insbesondere kann in die erste Rippenrohrreihe ein zweiter fluider Eduktstrom mit einer bestimmten Zusammensetzung und in die zweite Reihe von Rippenrohren ein zweiter fluider Eduktstrom mit einer hiervon unterschiedlichen Zusammensetzung eingeleitet werden.

Die zweite Reihe von Rippenrohren ist gegenüber der ersten auf Lücke angeordnet sowie, für den Fall von drei Rippenrohrreihen, die dritte Rippenrohrreihe auf Lücke zur zweiten Rippenrohrreihe. Die zweite und gegebenenfalls auch die dritte Reihe von Rippenrohren können vorteilhaft von einem Wärmeträger durchströmt sein. Es ist auch möglich die zweite und gegebenenfalls auch die dritte Reihe von Rippenrohren aus Vollmaterial beliebigen Querschnitts auszubilden.

Innerhalb einer Rippenrohrreihe sollen Rippenrohre gleicher Geometrie eingesetzt werden, diese kann jedoch innerhalb der Rippenrohrreihen variierten.

Die Rippenrohre weisen am Außenumfang der sie bildenden Rohre in den Rippengängen zwischen den Rippen pro Rippengang jeweils zwei diametral entgegengesetzte Öffnungen auf, an den Stellen mit dem geringsten Abstand zu dem jeweils benachbarten Rippenrohr in der Rippenrohrreihe. Durch diese Öffnungen wird das zweite fluide Edukt in die Rippengänge zwischen den Rippen in das erste fluide Edukt eingedüst. Es werden somit in den Rippengänge eine Vielzahl von feinskaligen Mischkammern zur Verfügung gestellt, mit hoher Turbulenz, insbesondere bei segmentartig eingeschnittenen Rippen, wobei dieser Effekt durch verschränkte Anstellung der Rippensegmente noch erhöht werden kann. Dadurch wird eine ausgezeichnete Mischgüte im Mikrobereich erreicht.

Im Innenraum der Rippenrohre kann vorteilhaft jeweils ein konzentrisches Einsteckrohr mit in geeigneten Abständen am Außenumfang desselben, angeordneten Ausströmöffnungen, vorgesehen sein, um die Vorverteilung des zweiten fluiden Eduktstromes über die Rohrlänge und damit auch einen weitgehenden Temperaturausgleich desselben zu gewährleisten.

Bevorzugt wird der zweite fluide Eduktstrom in die Rippenrohre über eine Ringleitung als Hauptverteiler, und besonders bevorzugt über zwei Ringleitungen, an jedem Ende desselben, gleichmäßig aufgegeben.

Weiter bevorzugt können die obigen Ringleitungen ihrerseits über jeweils eine weitere zusätzliche Ringleitung, bevorzugt mit größerem Durchmesser und Anordnung außerhalb der oben genannten Ringleitungen, versorgt werden.

Den Rippenrohrreihen ist, ebenfalls quer zur Anströmrichtung des ersten fluiden Eduktstromes, und somit im Wesentlichen parallel zu der aus den Rippenrohrreihen gebildeten Ebene, insbesondere für den Fall des Axialstromreaktors, bzw. auf einem konzentrischen Kreisring zu den Rippenrohrreihen, insbesondere für den Fall des Radialstromreaktors, ein Lochblech vorgeschaltet.

Das vorgeschaltete Lochblech weist Öffnungen auf, deren Gesamtfläche bevorzugt bezogen auf die Querschnittsfläche der Zuführung des ersten fluiden Eduktstromes kleiner oder gleich 0,5, insbesondere kleiner oder gleich 0,3, ist.

Das vorgeschaltete Lochblech ist vorteilhaft zur Anströmfläche der ersten Rippenrohrreihe um das Sieben- bis Zwanzigfache des Durchmessers der Öffnungen im vorgeschalteten Lochblech beabstandet

Der Durchmesser der Öffnungen im vorgeschalteten Lochblech ist vorteilhaft kleiner als die Hälfte des lichten Abstandes der Rippen zwischen zwei aufeinander folgenden Umläufen.

Die Einmischvorrichtung weist in Abströmrichtung aus derselben ein zweites, nachgeschaltetes Lochblech auf, mit Öffnungen, deren Durchmesser größer oder gleich dem Durchmesser des vorgeschalteten Lochbleches ist.

Als Lochbleche werden überwiegend ebene Bauteile mit Öffnungen beliebigen Querschnitts verstanden.

Das Verhältnis der Blechdicke beider Lochbleche, des vorgeschalteten und des nachgeschalteten Lochbleches, bezogen auf den Durchmesser der Öffnungen in den Lochblechen, liegt bevorzugt im Bereich zwischen 0,75 und 2,0.

Das nachgeschaltete Lochblech ist vorteilhaft von der Anströmebene der letzten Reihe von Rippenrohren um das 0,75 bis Zweifache des Durchmesser der Rippenrohre der letzten der Rippenrohrreihe beabstandet angeordnet.

Das nachgeschaltete Lochblech ist vorteilhaft zum Eintritt in das Katalysatorbett in einem Abstand zwischen 5 und 20 mal dem Durchmesser der Öffnungen in demselben beabstandet.

Der Werkstoff für die Rippenrohre und die Lochbleche ist bevorzugt Edelstahl, Werkstoffe, die bei erhöhter Temperatur oxidations- und gegebenenfalls aufkohlungsbeständig sind, sind besonders bevorzugt.

Die Einmischvorrichtung ist im Wesentlichen quer zur Strömungsrichtung des ersten fluiden Eduktstromes angeordnet. Darunter wird verstanden, dass der erste fluide Eduktstrom in Richtung der Normalen zur Hauptfläche der Einmischvorrichtung zugeführt wird, die eben sein kann, wie bei Axialstromreaktoren, oder auch gekrümmt, wie bei Radialstromreaktoren. Unter im Wesentlichen quer sollen jedoch auch Abweichungen von der Normalen zwischen ± 5° oder ± 10°, oder auch ± 30°, verstanden werden.

Die Einmischvorrichtung kann mit Bautiefen, das heißt einem Abstand zwischen dem vorgeschalteten und dem nachgeschalteten Lochblech, im Bereich zwischen 100 und 200 mm, eine ausgezeichnete, nahezu 100 %ige Mischgüte erreichen, bei einem Druckverlust im ersten fluiden Eduktstrom, häufig dem Reaktionsgas, in der Größenordnung von 20 mbar und einem Druckverlust im zweiten fluiden Eduktstrom, häufig einem Sauerstoff enthaltenden Strom, der bereits aus Sicherheitsgründen unter einem gewissen Überdruck stehen muss, im Bereich von etwa 50 bis 100 mbar.

Es wird eine extrem hohe Anzahl von Eindüsestellen des zweiten fluiden Eduktstromes in den ersten fluiden Eduktstrom, in der Größenordnung von 10000 Eindüsstellen pro m₂, erreicht.

Der vorstehend beschriebene Reaktor eignet sich insbesondere zur Durchführungen von Umsetzungen eines ersten gasförmigen Reaktionsgemisches mit einem Sauerstoff enthaltenden Gasstrom, beispielsweise Luft, insbesondere zur Durchführung von Oxydehydrierungen von Kohlenwasserstoffen, beispielsweise Propan oder Butan, zur partiellen Oxidation von Erdgas mit Luft, zur Entschwefelung, zu Catalytic Cracking oder ailgemein zu als Chemical Conversion bekannten Umsetzungen.

Die Erfindung wird im Folgenden anhand einer Zeichnung sowie eines Ausführungsbeispiels näher beschrieben.

In der Zeichnung zeigen im Einzelnen:
- Figur 1A: einen kreissegmentartigen Ausschnitt durch einen erfindungsgemäßen Radialstromreaktor mit Strömungsrichtung des ersten fluiden Eduktstromes von innen nach außen,
- Figur 1B: eine zu Figur 1A analoge Darstellung, jedoch mit Strömungsrichtung des ersten fluiden Eduktstromes von außen nach innen,
- Figur 2A: die Detaildarstellung eines Rippenrohres, mit Darstellung einer einzelnen Rippe und der Arbeitsgänge zu ihrer Ausbildung in Figur 2B sowie eine Querschnittsdarstellung durch ein Rippenrohr in Figur 2C,
- Figur 3: eine perspektivische Darstellung eines Rippenrohres,
- Figur 4: eine Längsschnittdarstellung durch eine bevorzugte Ausführungsform für ein Rippenrohr mit Querschnittsdarstellung in Figur 4B,
- Figur 5A: eine bevorzugte Ausführungsform für einen erfindungsgemäßen Radialstrom-reaktor, mit Strömungsführung von innen nach außen und Querschnittsdarstellung in Figur 5B,
- Figur 5C: eine weitere Ausführungsform eines erfindungsgemäßen Radialstromreaktors, mit Strömungsführung von außen nach innen,
- Figur 6: eine weitere bevorzugte Ausführungsform für einen erfindungsgemäßen Radialstromreaktor,
- Figur 7A: eine bevorzugte Ausführungsform eines erfindungsgemäßen Axialstromreaktors, mit Darstellung eines Ausschnitts der Einmischvorrichtung in Figur 7B und
- Figur 8: eine Längsschnittdarstellung durch ein Versuchsmodul zur Bestimmung der Mischgüte.

In den Figuren bezeichnen gleiche Bezugszeichen jeweils gleiche oder entsprechende Merkmale.

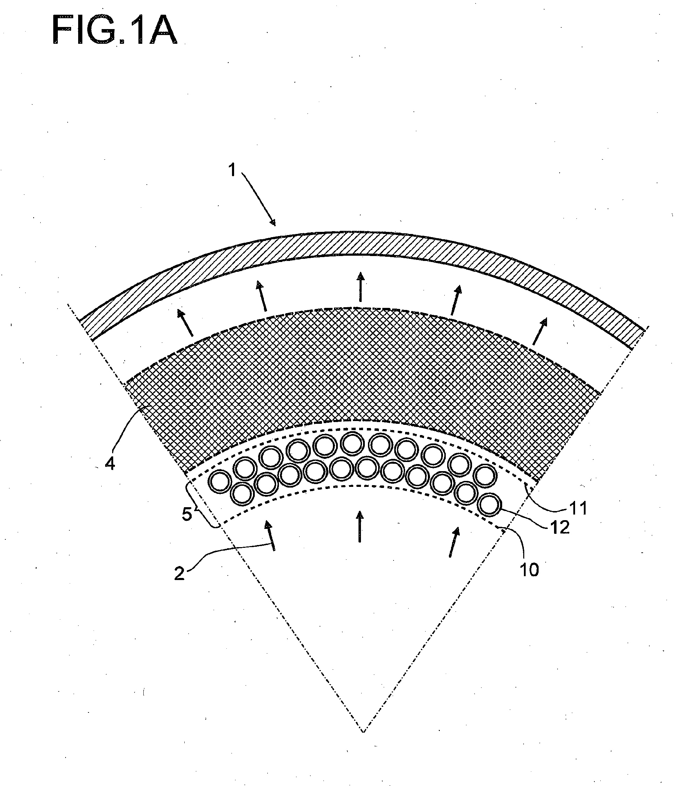

Figur 1A zeigt ein Kreissegment aus einem Querschnitt durch eine erste Ausführungsform eines erfindungsgemäßen Radialstromreaktors 1 mit Zuführung eines ersten fluiden Stromes 2 über den Innenraum des Reaktors und Abströmung desselben am Reaktoraußenmantel. Der erste fluide Eduktstrom 2 trifft senkrecht auf eine Einmischvorrichtung 5, umfassend zwei Reihen von Rippenrohren 12, die auf Lücke angeordnet sind und den in Strömungsrichtung ein erstes Lochblech 10 vorgeschaltet und ein zweites Lochblech 11 nachgeschaltet ist. Die beiden Reihen der Rippenrohre 12 sowie das vorgeschaltete Lochblech 10 und das nachgeschaltete Lochblech 11 sind jeweils auf konzentrischen Kreisringen angeordnet. Das in der Einmischvorrichtung 5 vorgemischte Reaktionsgemisch durchströmt anschließend das Katalysatorbett 4.

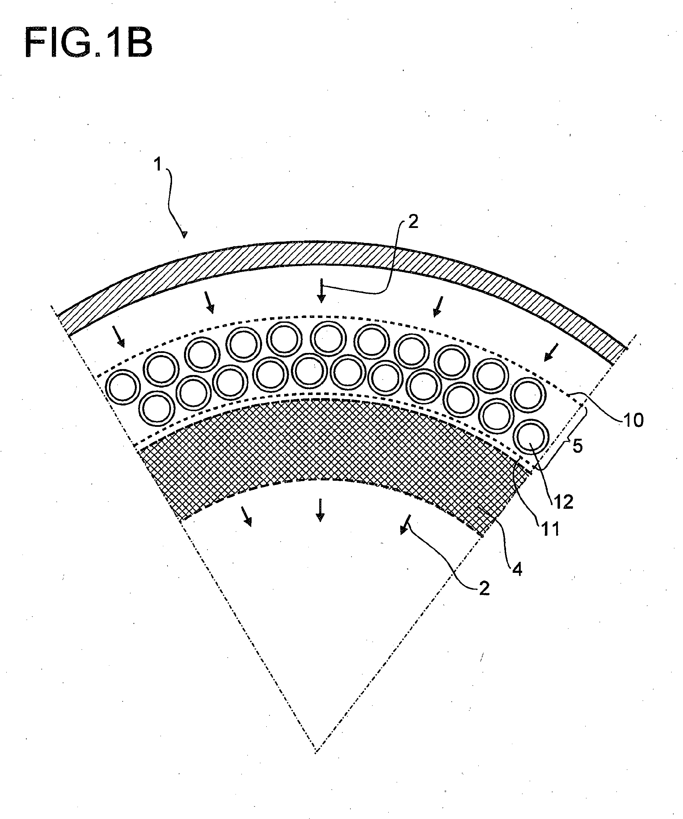

In Figur 1B ist ein Kreissegment aus dem Querschnitt durch einen weiteren erfindungsgemäßen Radialstromreaktor dargestellt, jedoch abweichend von der Darstellung in Figur 1A, mit Strömungsführung des ersten fluiden Edukstromes 2 von außen nach innen. Entsprechend ist die Einmischvorrichtung 5, umfassend zwei Reihen von Rippenrohren 12 sowie ein vorgeschaltetes Lochblech 10 und ein nachgeschaltetes Lochblech 11, weil stromaufwärts des Katalysatorbettes 4, entlang von Kreisringen mit größerem Radius gegenüber dem Katalysatorbett 4, angeordnet.

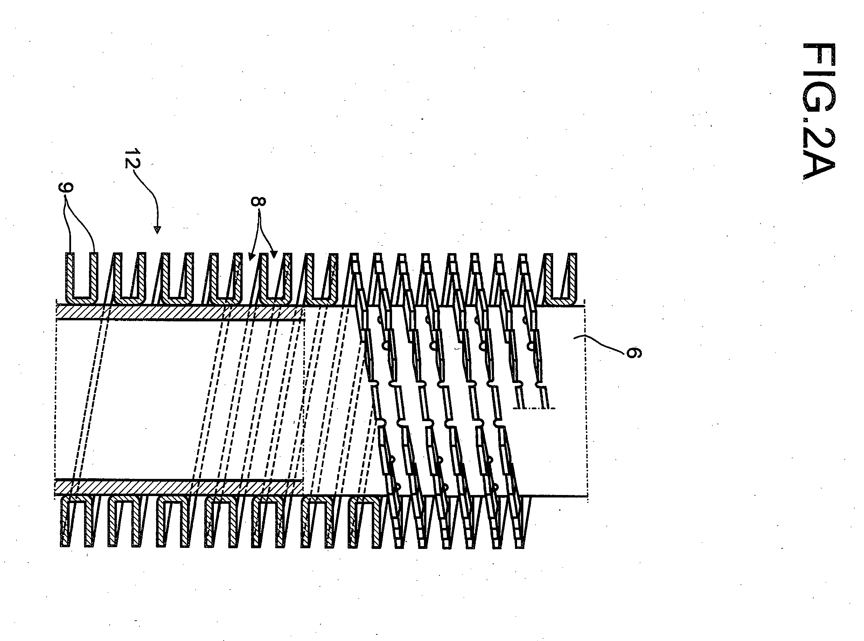

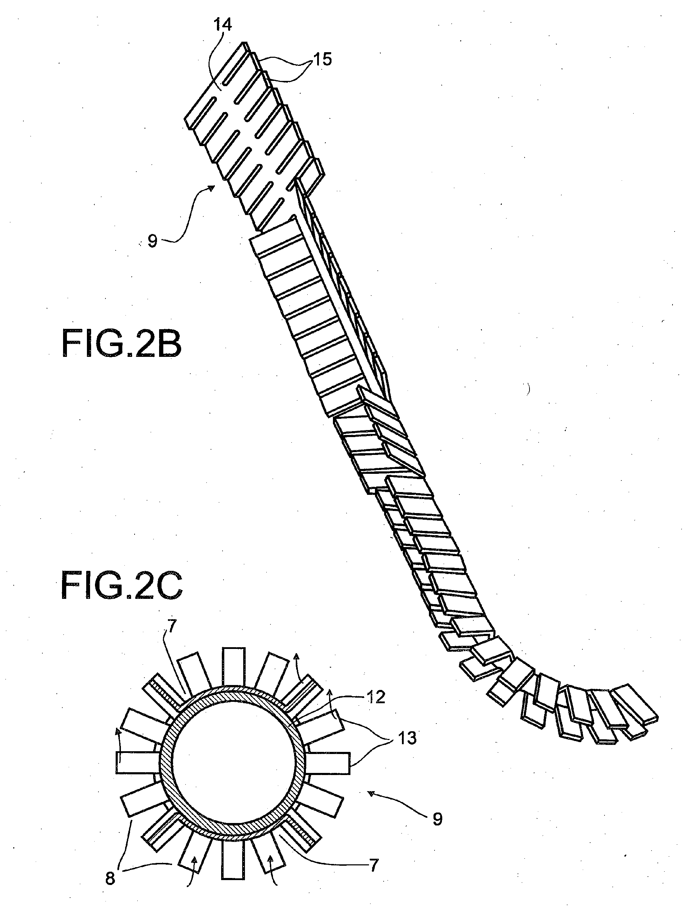

Die Figuren 2A bis 2C zeigen Detaildarstellungen von Rippenrohren 12 mit diametral gegenüber angeordneten Öffnungen 7 in den Rippengängen 8 zwischen den Rippen 9 der Rippenrohre 12. Hiervon zeigt Figur 2B eine Rippe 9, die bis auf eine Rippenbasis 14 durch Einschnitte in Segmente 13 aufgeteilt ist und Figur 2C einen Querschnitt durch ein Rippenrohr 12 mit Rohr 6, Rippengängen 8, und Segmenten 13.

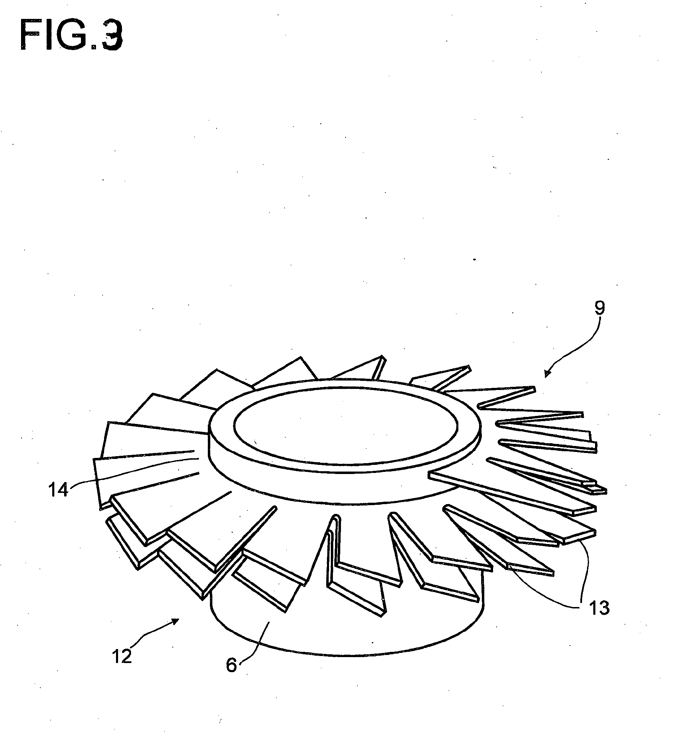

Figur 3 zeigt eine perspektivische Darstellung eines Rippenrohres 12 mit Rohr 6 und wendelförmig aufgebrachter Rippe 9, die in Segmente 13 mit Ausnahme einer durchgehenden Rippenbasis 14 aufgeteilt ist.

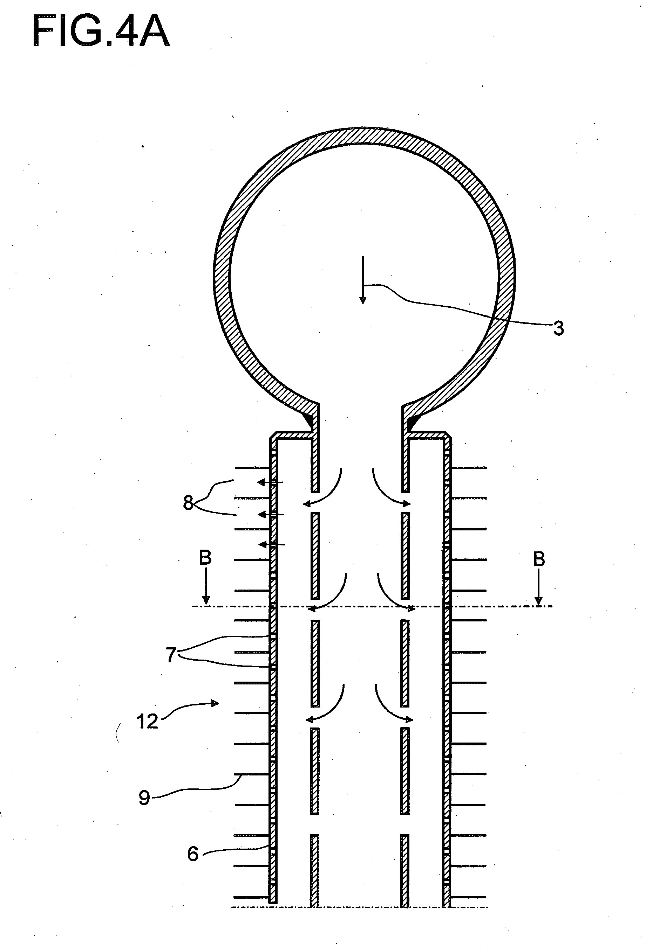

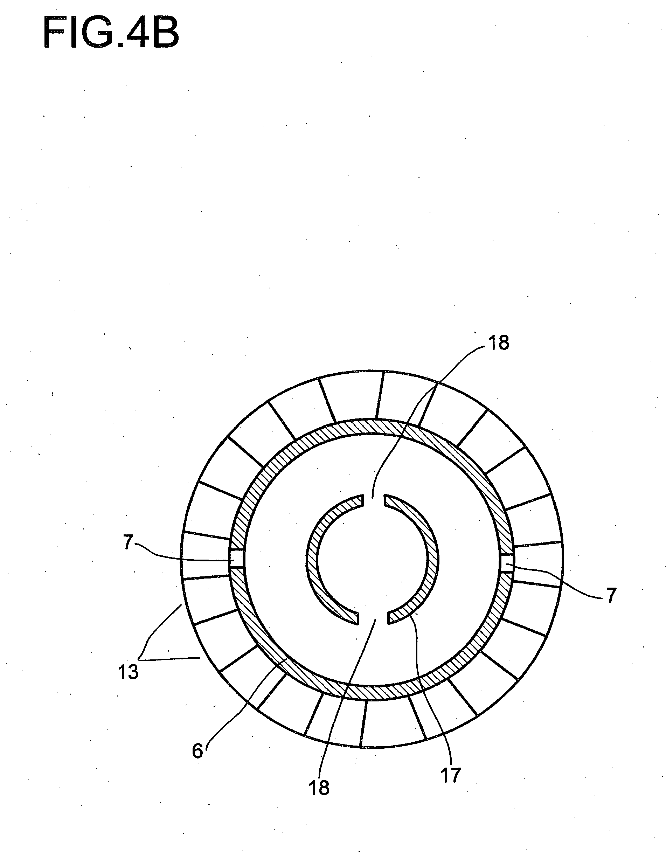

Figur 4A zeigt eine Längsschnittdarstellung durch ein Rippenrohr 12 mit Rohr 6 und Rippen 9, mit Öffnungen 7 in den Rippengängen 8 zwischen den Rippen 9 der Rippenrohre 12. Im Rohrinneren ist konzentrisch ein zentrales Einsteckrohr 17 vorgesehen, mit Öffnungen 18, die in der Querschnittdarstellung in der Ebene B-B in Figur 4B ersichtlich sind; und über die der zweite fluide Eduktstrom 3 in Längsrichtung der Rippenrohre 12 verteilt wird. In Figur 4A ist ein Ende des Rippenrohres 12 mit Ringverteiler 19 für den zweiten fluiden Eduktstrom 3 auf die Rippenrohre 12 dargestellt.

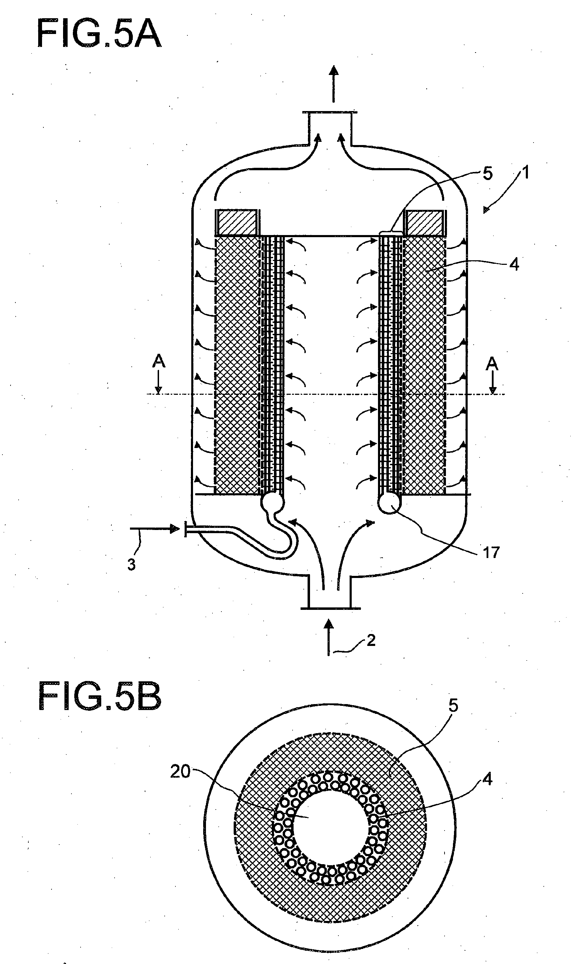

Figur 5A zeigt einen Längsschnitt durch einen Radialstromreaktor mit Zuführung des ersten fluiden Eduktstromes 2 durch den zentralen Innenraum des Reaktors und Abführung am Außenmantel des Reaktors 1.

Figur 5B verdeutlicht, zusätzlich zur im Querschnitt ringförmigen Anordnung von Katalysatorbett 4 und Einmischvorrichtung 5, den zentralen, vom ersten fluiden Eduktstrom 2 durchströmten Querschnitt 20.

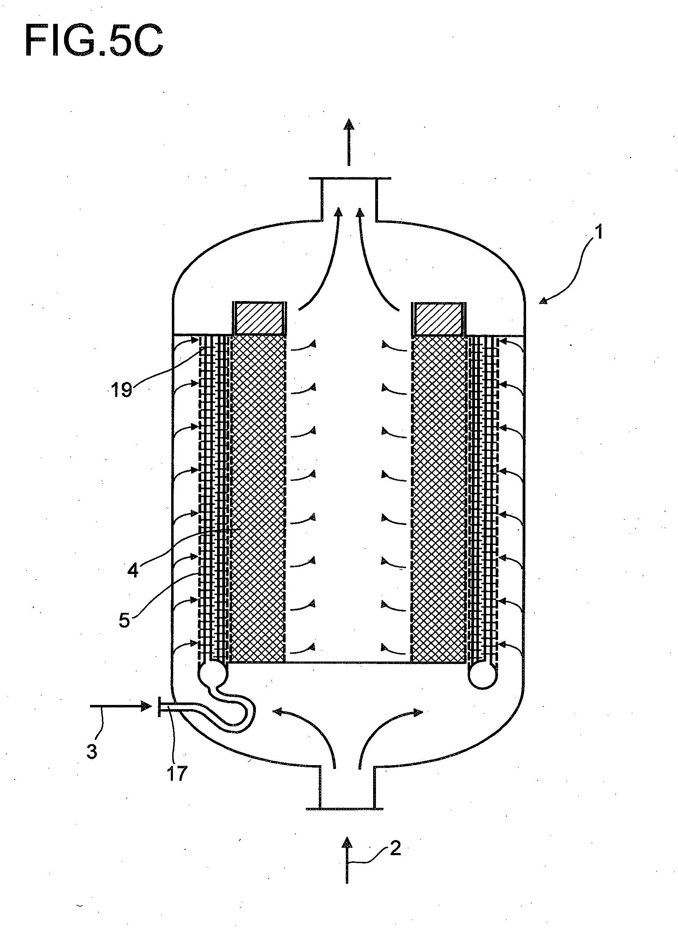

Der im Längsschnitt in Figur 5C dargestellte Reaktor ist analog zum Reaktor aus Figur 5A aufgebaut, jedoch mit Zuführung des ersten fluiden Edukstromes 2 von außen nach innen und entsprechend mit Anordnung der Einmischvorrichtung 5 außerhalb des Katalysatorbettes 4.

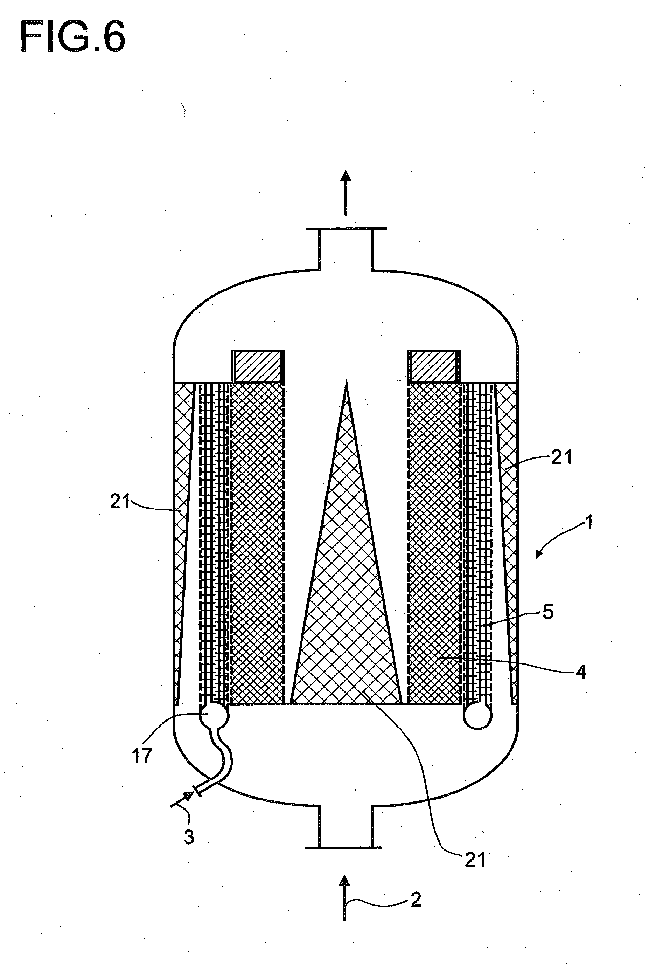

Figur 6 verdeutlicht eine weitere bevorzugte Ausführungsform eines erfindungsgemäßen Reaktors 1 mit Strömungsführung des zweiten fluiden Eduktstromes 3 von außen nach innen, mit Verdrängungskörpern 21 im zentralen Innenraum und am Reaktormantel, die bevorzugt wie in der Figur dargestellt, parabolisch sein können.

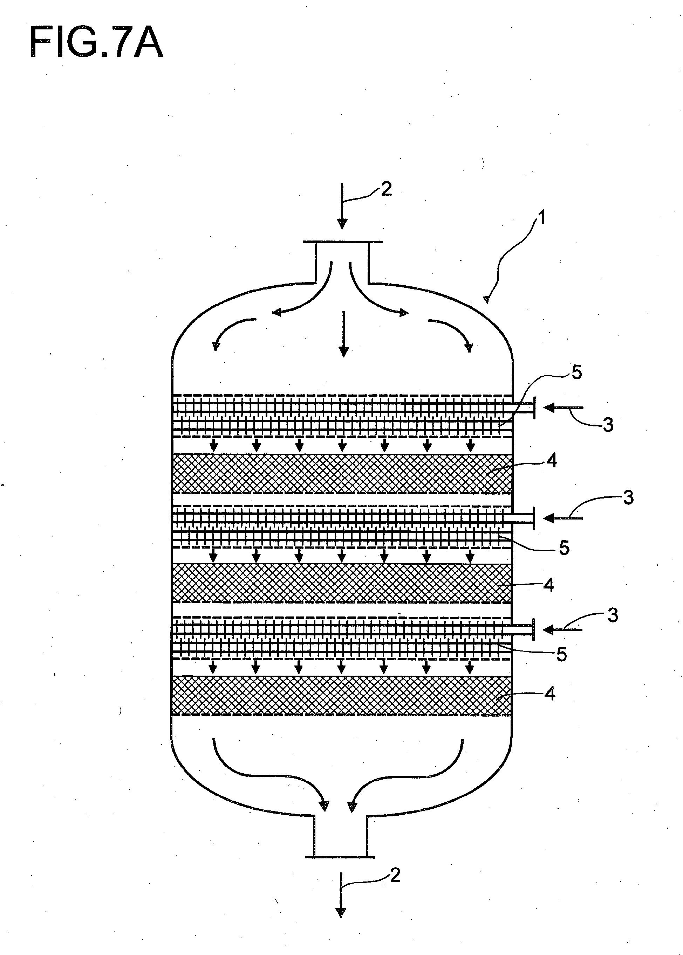

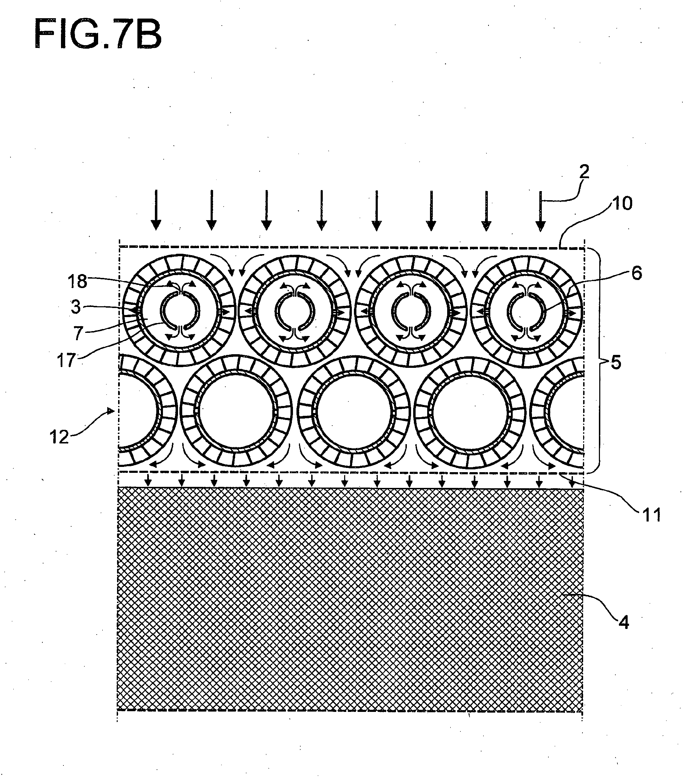

Figur 7A zeigt einen Längsschnitt durch einen Axialstromreaktor mit in Ebenen angordneten Katalysatorbetten 4 und Einmischvorrichtungen 5 mit Darstellung eines Längsschnittes in Figur 7A und eines Ausschnittes aus einem Längsschnitt in einer Ebene senkrecht zur in Figur 7A dargestellten Ebene in der Figur 7B. Der Ausschnitt in Figur 7B zeigt zwei Reihen von Rippenrohren 12 mit Öffnungen 7 für den Austritt des zweiten fluiden Edukstromes 3 aus dem Innenraum der Rippenrohre 12, mit zusätzlicher Vorverteilung des weiteren fluiden Eduktstromes 3 über zentrale Einsteckrohre 17 mit Öffnungen 18, sowie ein vorgeschaltetes Lochblech 10 und ein nachgeschaltetes Lochblech 11.

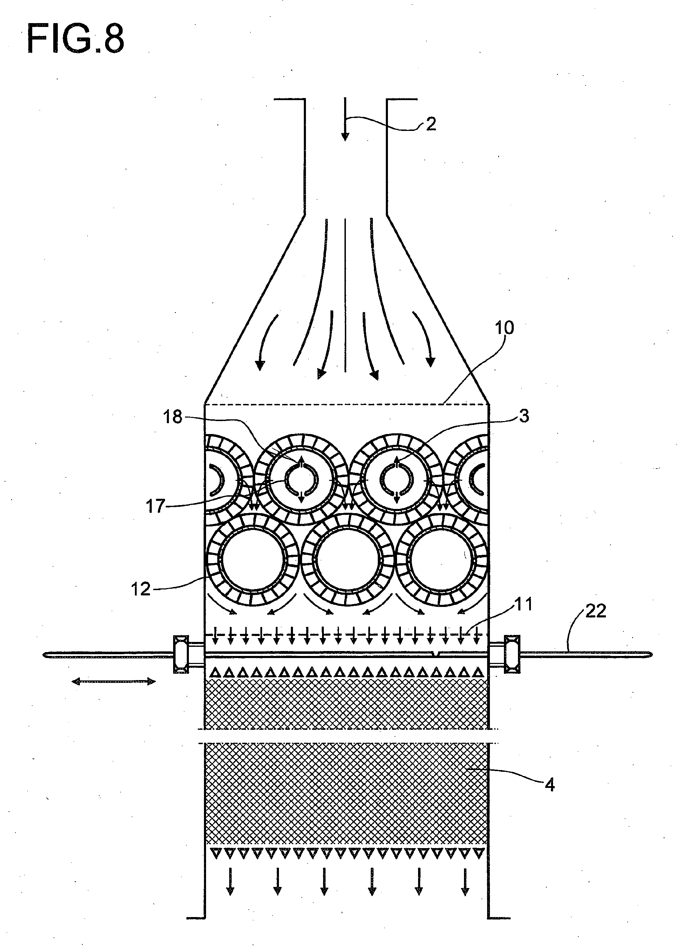

Figur 8 zeigt eine Längsschnittdarstellung durch ein Versuchsmodul zur Bestimmung der Mischgüte, mit zwei Reihen von Rippenrohren 6, mit zentralen Einsteckrohren 17 mit Öffnungen 18, vorgeschaltetem Lochblech 10 und nachgeschaltetem Lochblech 11, sowie mit einer auswechselbaren Katalysatorschüttung 4 und einem ausziehbaren Messstab 22 für die Konzentrationsmessung.

### Ausführungsbeispiel

Mit dem in Figur 8 dargestellten Versuchsmodul wurde die Mischgüte von Modellgasen, und zwar eines ersten, aus Stickstoff bestehendem Haupt-Gasstromes und eines zweiten, aus Stickstoff und 10 Vol.-% Kohlendioxid bestehenden Gasstromes, mit 10-fach geringerem Volumenstrom gegenüber dem Haupt-Gasstrom, bestimmt. Die Einmischvorrichtung umfasste zwei Reihen von Rippenrohren 12, die auf Lücke angeordnet waren, aus jeweils drei Rohren 6 mit einem Außendurchmesser von 31,7 mm und wendelförmig angebrachter Rippe 9 mit 17 Umläufen um das Rohr, die in Segmenten mit einer Breite von 4 mm und einer Höhe von 6,4 mm eingeschnitten war. In einem Abstand von 15 mm zur Anströmebene der ersten Reihe von Rippenrohren 12 war ein vorgeschaltetes Lochblech 10 angeordnet, mit einem Öffnungsverhältnis von 5 % und von der Abströmebene der zweiten Rippenrohrreihe in einem Abstand von ebenfalls 15 mm ein nachgeschaltetes Lochblech, mit einem Öffnungsverhältnis von ebenfalls 5 %.

Die Konzentration des Kohlendioxids im Stickstoffstrom wurde durch Infrarotabsorption mit einem Gerät UNOR 6N der Firma Maihak, Hamburg, bestimmt. Um Kalibrier-Unsicherheiten auszuschließen, wurde an das Ende des Messstabes ein 20 m langer Schlauch angeschlossen, und kurz vor dem Schlauchende Gas zur Referenzmessung in das Gerät geleitet. Die Referenzmessung ergab genau 1 Vol-% Kohlendioxid.

Für die Bestimmung der Mischgüte durch die Einmischvorrichtung mit Rippenrohren, vorgeschaltetem und nachgeschaltetem Lochblech wurde der Messstab 22 kontinuierlich durch den Apparat verschoben in Abständen von jeweils 2 mm Proben entnommen und die Konzentration derselben an Kohlendioxid mit dem oben angegebenen Gerät durch Infrarotabsorption bestimmt. Es wurden Messwerte zwischen 0,99 Vol-% Kohlendioxid und 1,01 Vol% Kohlendioxid, das heißt Abweichungen von maximal ±1 % vom Wert der Referenzmessung, und somit eine ausgezeichnete Mischgüte über den gesamten Querschnitt des Apparates, gemessen.

### Bezugszeichenliste

- 1: Reaktor
- 2: erstes fluides Edukt
- 3: zweites fluides Edukt
- 4: Katalysatorbett
- 5: Einmischvorrichtung
- 6: Rohre
- 7: Öffnungen in den Rohren 6
- 8: Rippengänge
- 9: Rippen
- 10: vorgeschaltetes Lochblech
- 11: nachgeschaltetes Lochblech
- 12: Rippenrohr
- 13: Segmente
- 14: Rippenbasis
- 15: Öffnungen in 10
- 16: Öffnungen in 11
- 17: zentrales Einsteckrohr
- 18: Öffnungen im zentralen Einsteckrohr 17
- 19: Ringverteiler
- 20: vom ersten fluiden Edukstrom durchströmter Querschnitt
- 21: Verdrängungskörper
- 22: Messstab

## Patentansprüche

1. Reaktor (1) zur Durchführung einer Reaktion zwischen zwei fluiden Edukten (2, 3) an einem Katalysatorbett (4) mit Vorvermischen der fluiden Edukte (2, 3) vor der Zuführung zum Katalysatorbett innerhalb einer Verzögerungszeit kleiner als 150 ms In einer Einmischvorrichtung (5), **dadurch gekennzeichnet, dass** die Einmischvorrichtung (5) aus den folgenden Elementen gebildet ist, die im Wesentlichen quer zur Anströmrichtung des ersten fluiden Edukstromes (2) angeordnet sind:
zwei oder drei hintereinander angeordneten Reihen von Rohren (6), mit Turbulenzerzeugern auf der Außenseite derselben, die Rippenrohre (12) sind, mit einem Außendurchmesser im Bereich zwischen 25 und 50 mm, wobei die zweite Reihe von Rippenrohren gegenüber der ersten auf Lücke angeordnet ist sowie für den Fall von drei Rippenrohrreihen, die dritte Rippenrohrreihe auf Lücke zur zweiten Rippenrohrreihe angeordnet ist, und die den freien Durchtrittsquerschnitt für den ersten fluiden Eduktstrom (2) auf 1/2 bis 1/10 verengen, wobei durch die Innenräume der Rohre (6) der zweite fluide Eduktstrom (3) geleitet und über Öffnungen (7) in den Rohren (6) in den ersten fluiden Eduktstrom (2) eingedüst wird, wobei die Turbulenzerzeuger als Rippen (9) ausgebildet sind und die Öffnungen (7) in den Rohren (6) in den Rippengängen (8) zwischen den Rippen (9) münden, und wobei die Rippenrohre (12) am Außenumfang der sie bildenden Rohre (6) in den Rippengängen (8) zwischen den Rippen (9) pro Rippengang (8) jeweils zwei diametral entgegengesetzte Öffnungen (7) aufweisen, an den Stellen mit dem geringsten Abstand zu dem jeweils benachbarten Rippenrohr (12) in der Rippenrohrreihe sowie
- einem den Rohren (6) vorgeschalteten Lochblech (10) und
- einem den Rohren (6) nachgeschalteten Lochblech (11), mit Öffnungen, deren Durchmesser größer oder gleich dem Durchmesser des vorgeschalteten Lochbleches (10) ist
und wobei die Einmischvorrichtung (5) eine Bautiefe, d. h. einen Abstand zwischen dem vorgeschalteten Lochblech (10) und dem nachgeschalteten Lochblech (11), im Bereich zwischen 100 und 200 mm aufweist.

2. Reaktor (1) nach Anspruch 1, **dadurch gekennzeichnet, dass** die Rippenrohre (12) den freien Durchtrittsquerschnitt für den ersten fluiden Eduktstrom, (2) auf 1/3 bis 1/6 desselben verengen.

3. Reaktor (1) nach Anspruch 1 oder 2, **dadurch gekennzeichnet, dass** die Rippenrohre (12) aus Rohren (6) mit zylindrischem Außenumfang gebildet sind, mit spiralförmig auf diesem entlang einer Streifen-Längskante aufgeschweißten, aus länglichen Streifen bestehenden Rippen (9), die unter Ausbildung von Segmenten (13) mit Ausnahme einer Rippenbasis (14) eingeschnitten sind.

4. Reaktor (1) nach Anspruch 3, **dadurch gekennzeichnet, dass** die Segmente (13) gegenüber der Rippenbasis (14) in einem Winkel hierzu verdreht sind.

5. Reaktor (1) nach einem der Ansprüche 1 bis 4, **dadurch gekennzeichnet, dass** die Rippenrohre (12) 100 bis 300 Umläufe der Rippen (9) pro Meter Länge des Rohres (6) aufweisen.

6. Reaktor (1) nach einem der Ansprüche 1 bis 5, **gekennzeichnet durch** ein Verhältnis der Höhe der Rippen (9) zum Außendurchmesser der Rohre (12) im Bereich von 1/10 bis 1/2.

7. Reaktor (1) nach einem der Ansprüche 1 bis 6, **gekennzeichnet durch** eine Dicke der Rippen (9) im Bereich zwischen 0,3 und 1,5 mm und **durch** eine Breite der Segmente (13) im Bereich zwischen 3 und 12 mm.

8. Reaktor (1) nach einem der Ansprüche 1 bis 7, **dadurch gekennzeichnet, dass** die zweite und gegebenenfalls die dritte Reihe von Rippenrohren (6) von einem Wärmeträger durchströmt ist oder aus Vollmaterial beliebigen Querschnitts ausgebildet ist.

9. Reaktor (1) nach einem der Ansprüche 1 bis 8, **dadurch gekennzeichnet, dass** das vorgeschaltete Lochblech (10) in einem Abstand zur Anströmebene der ersten Reihe von Rippenrohren (6) durch das erste fluide Edukt (2) entsprechend 7 bis 20 mal dem Durchmesser der Öffnungen (15) im vorgeschalteten Lochblech (10) angeordnet ist.

10. Reaktor (1) nach einem der Ansprüche 1 bis 9, **dadurch gekennzeichnet, dass** der Durchmesser der Öffnungen (15) im vorgeschalteten Lochblech (10) kleiner als die Hälfte des lichten Abstandes der Rippen zwischen zwei aufeinander folgenden Umläufen ist.

## Claims

1. A reactor (1) for carrying out a reaction between two fluid starting materials (2, 3) over a catalyst bed (4) with premixing of the fluid starting materials (2, 3) before introduction into the catalyst bed within a delay time of less than 150 ms in a mixing-in device (5), wherein the mixing-in device (5) is made up of the following elements which are arranged essentially transverse to the inflow direction of the first fluid starting material stream (2):
- two or three rows arranged behind one another of tubes (6) which have turbulence generators on the outside thereof, which are finned tubes (12) having an external diameter in the range from 25 to 50 mm, with the second row of finned tubes being arranged opposite the first on gaps and, in the case of three rows of finned tubes, the third row of finned tubes being arranged on gaps to the second row of finned tubes, and which constrict the free flow cross section for the first fluid starting material stream (2) to from 1/2 to 1/10, with the second fluid starting material stream (3) being passed through the interiors of the tubes (6) and injected via openings (7) in the tubes (6) into the first fluid starting material stream (2), with the turbulence generators being configured as fins (9) and the openings (7) opening into the tubes (6) in the channels (8) between the fins (9) and the finned tubes (12) each having two diametrically opposite openings (7) per channel (8) on the exterior circumference of the tubes (6) forming them in the channels (8) between the fins (9) at the places having the smallest distance to the in each case adjacent finned tube (12) in the row of finned tubes, and
- a perforated plate (10) upstream of the tubes (6) and
- a perforated plate (11) which is arranged downstream of the tubes (6) and has openings whose diameter is greater than or equal to the diameter of the upstream perforated plate (10)
and the mixing-in device (5) has a depth, i.e. a distance between the preceding perforated plate (10) and the subsequent perforated plate (11), in the range from 100 to 200 mm.

2. The reactor (1) according to claim 1, wherein the finned tubes (12) constrict the free flow cross section for the first fluid starting material stream (2) to from 1/3 to 1/6 of its original size.

3. The reactor (1) according to claim 1 or 2, wherein the finned tubes (12) are formed by tubes (6) which have a cylindrical exterior and have fins (9) which consist of elongated strips and are welded along a longitudinal edge of the strip in a spiral fashion onto the exterior of the tube and are cut with the exception of a fin base (14) to form segments (13).

4. The reactor (1) according to claim 3, wherein the segments (13) are rotated at an angle to the fin base (14) .

5. The reactor (1) according to any of claims 1 to 4, wherein the finned tubes (12) have from 100 to 300 turns of the fins (9) per meter length of the tube (6) .

6. The reactor (1) according to any of claims 1 to 5, wherein the ratio of the height of the fins (9) to the external diameter of the tubes (12) is in the range from 1/10 to 1/2.

7. The reactor (1) according to any of claims 1 to 6, wherein the fins (9) have a thickness in the range from 0.3 to 1.5 mm and the segments (13) have a width in the range from 3 to 12 mm.

8. The reactor (1) according to any of claims 1 to 7, wherein a heat transfer medium flows through the second row and optionally the third row of finned tubes (6) or the second and optionally third rows are formed by solid material of any cross section.

9. The reactor (1) according to any of claims 1 to 8, wherein the upstream perforated plate (10) is arranged at a distance corresponding to from 7 to 20 times the diameter of the openings (15) in the upstream perforated plate (10) from the inflow plane of the first row of finned tubes (6) for the first fluid starting material (2).

10. The reactor (1) according to any of claims 1 to 9, wherein the diameter of the openings (15) in the upstream perforated plate (10) is smaller than half of the clear spacing of the fins between two successive turns.

## Revendications

1. Réacteur (1) destiné à l'exécution d'une réaction entre deux produits de départ fluides (2, 3) sur un lit de catalyseur (4) avec prémélange des produits de départ fluides (2, 3) avant l'arrivée sur le lit de catalyseur en l'espace d'un temps de latence inférieur à 150 ms dans un dispositif d'incorporation par mélange (5), **caractérisé en ce que** le dispositif d'incorporation par mélange (5) est constitué des éléments suivants, qui sont disposés essentiellement perpendiculairement au sens d'écoulement du premier courant de produit de départ fluide (2) :
- deux ou trois rangées de tubes (6), disposées successivement, avec sur la face externe de ceux-ci des générateurs de turbulence qui sont des tubes à ailettes (12), ayant un diamètre externe dans la plage comprise entre 25 et 50 mm, la deuxième rangée de tubes à ailettes étant disposée en quinconce par rapport à la première, ainsi que dans le cas de trois rangées de tubes à ailettes, la troisième rangée de tubes à ailettes étant disposée en quinconce par rapport à la deuxième rangée de tubes à ailettes, et qui resserrent jusqu'à 1/2 à 1/10 la section transversale de passage libre pour le premier courant de produit de départ fluide (2), le deuxième courant de produit de départ fluide (3) étant envoyé à travers les espaces internes des tubes (6) et injecté dans le premier courant de produit de départ fluide (2) par des ouvertures (7) dans les tubes (6), les générateurs de turbulence étant conçus sous forme d'ailettes (9) et les ouvertures (7) dans les tubes (6) débouchant dans les spires d'ailettes (8) entre les ailettes (9), et les tubes à ailettes (12) comportant par spire d'ailette (8) chaque fois deux ouvertures (7) diamétralement opposées, à la périphérie externe des tubes (6) qui les constituent, dans les spires d'ailettes (8) entre les ailettes (9), aux points présentant la plus faible distance par rapport au tube à ailettes (12) voisin respectif dans la rangée de tubes à ailettes, ainsi
- qu'une tôle perforée (10) placée en amont des tubes (6) et
- une tôle perforée (11) placée en aval des tubes (6), comportant des ouvertures dont le diamètre est supérieur ou égal au diamètre de la tôle perforée (10) placée en amont
et le dispositif d'homogénisation par mélange (5) présentant une profondeur de construction, c'est-à-dire une distance entre la tôle perforée (10) placée en amont et la tôle perforée (11) placée en aval, dans la plage comprise entre 100 et 200 mm.

2. Réacteur (1) selon la revendication 1, **caractérisé en ce que** les tubes à ailettes (12) resserrent la section transversale de passage libre pour le premier courant de départ fluide (2) jusqu'à 1/3 à 1/6 de celui-ci.

3. Réacteur (1) selon la revendication 1 ou 2, **caractérisé en ce que** les tubes à ailettes (12) sont constitués de tubes (6) à périphérie externe cylindrique, comportant des ailettes (9) constituées de bandes allongées soudées en spirale sur celle-ci le long d'un bord longitudinal de la bande, qui sont découpées par enlèvement d'une base d'ailette (14) avec formation de segments (13).

4. Réacteur (1) selon la revendication 3, **caractérisé en ce que** les segments (13) sont inclinés par rapport à la base d'ailette (14) en faisant un angle avec celle-ci.

5. Réacteur (1) selon l'une quelconque des revendications 1 à 4, **caractérisé en ce que** les tubes à ailettes (12) comportent 100 à 300 tours des ailettes (9) par mètre de longueur du tube (6).

6. Réacteur (1) selon l'une quelconque des revendications 1 à 5, **caractérisé par** un rapport de la hauteur des ailettes (9) au diamètre externe des tubes (12) dans la plage de 1/10 à 1/2.

7. Réacteur (1) selon l'une quelconque des revendications 1 à 6, **caractérisé par** une épaisseur des ailettes (9) dans la plage comprise entre 0,3 et 1,5 mm et par une largeur des segments (13) dans la plage comprise entre 3 et 12 mm.

8. Réacteur (1) selon l'une quelconque des revendications 1 à 7, **caractérisé en ce que** la deuxième et éventuellement la troisième rangée de tubes à ailettes (6) est/sont traversée(s) par un fluide caloporteur ou est/sont constituée(s) d'un matériau plein de section transversale quelconque.

9. Réacteur (1) selon l'une quelconque des revendications 1 à 8, **caractérisé en ce que** la tôle perforée (10) placée en amont est disposée en une écartement par rapport au plan de la première rangée de tubes à ailettes (6) sur lequel s'écoule le premier produit de départ fluide (2), qui correspond à 7 à 20 fois le diamètre des ouvertures (15) dans la tôle perforée (10) placée en amont.

10. Réacteur (1) selon l'une quelconque des revendications 1 à 9, **caractérisé en ce que** le diamètre des ouvertures (15) dans la tôle perforée (10) placée en amont est inférieur à la moitié de l'écartement libre des ailettes entre deux tours successifs.
